# EUROPEAN PATENT APPLICATION

(11) **EP 4 227 714 A1**
(43) Date of publication of application: **16.08.2023**
(21) Application number: 22305145.9
(22) Date of filing: 10.02.2022
(51) Int. Cl.: G01W 1/10, G06N 3/04, G06N 3/08

(54) **A METHOD FOR FORECASTING WIND PARAMETERS IN AN AREA OF INTEREST**

(71) Applicant: TotalEnergies One Tech, 92400 Courbevoie (FR)
(72) Inventor: YOUSFI, Sonia, 91400 Orsay (FR)
(74) Representative: Lavoix

(57) **Abstract**

The invention relates to a method for forecasting wind parameters in an area of interest, the method comprising:
- obtaining at least a first model (M1) configured to output a prediction over time of a first parameter for the area of interest,
- obtaining past spatiotemporal data for the area of interest to form a training database,
- training a second model (M2) for forecasting wind parameters for the area of interest when past spatiotemporal data of the area of interest are inputted in the second model (M2), the training of the second model (M2) depending on the training database and on predictions of the first parameter obtained with each first model (M1) for the area of interest, and
- operating the trained second model (M2) for forecasting wind parameters for an area of interest.

## Description

### TECHNICAL FIELD OF THE INVENTION

The present invention concerns a method for forecasting wind parameters in an area of interest. The present invention also concerns an associated computer program product. The present invention also relates to an associated readable information carrier.

### BACKGROUND OF THE INVENTION

Wind resources forecast is a very crucial task in the wind energy sector. For large timescales (beyond few days to sub-seasonal or seasonal scales), the forecast becomes more essential and challenging in order to improve resilience to climate variability and change. Operationally, it has a direct impact on the Transmission System Operators which make seasonal energy projections in order to balance the supply and demand and anticipate chaotic lack of energy.

Unlike short timescales where Numerical Weather Prediction (NWP) or traditional statistical models have proven their efficiency, the long-term forecast remains a very challenging task.

In general, weather and climate modeling is based on a set of physics laws reflecting their status and dynamics. Forecast centers rely mainly on NWP to predict them by numerically solving Partial Differential Equations. For large time and space scales, this leads to a poor trade-off between accuracy and execution time and exposes the model to nature chaos (bias and generalization problem).

Other approaches try to use pure Machine Learning models to learn patterns from past data (observation or reanalysis data) and project them to the future. This can be a good solution for short time scales, but such models cannot project predictions in an efficient way for long-term scales.

Other methods are hybrid: combining NWP and ML in a cascade manner or using the forecast outputs of NWP and try to enhance them using ML model. For long-term scales, it can lead to an accumulation of errors from both sides.

### SUMMARY OF THE INVENTION

There exists a need for forecasting wind resources in a more efficient and precise way, even for large timescales.

To this end, the invention relates to a method for forecasting wind parameters in an area of interest, the wind parameters comprising the speed of the wind and the direction of the wind, the method comprising the following steps which are computer-implemented:
- obtaining at least a first model configured to output a prediction over time of a first parameter for the area of interest, the first parameter being a weather or climate parameter, each weather or climate parameter being different from a wind parameter, each first model being a physics-informed machine learning model,
- obtaining past spatiotemporal data for the area of interest to form a training database, the past spatiotemporal data comprising at least a temporal evolution of the wind parameters for the area of interest,
- training a second model for forecasting wind parameters for the area of interest when past spatiotemporal data of the area of interest are inputted in the second model, the second model being a deep learning spatiotemporal neural network, the training of the second model depending on the training database and on predictions of the first parameter obtained with each first model for the area of interest,
- obtaining past spatiotemporal data for the area of interest, and
- operating the trained second model for forecasting wind parameters for the area of interest on the basis of the past spatiotemporal data obtained for the area of interest and on predictions of the first parameter obtained with each first model for the area of interest.

The method according to the invention may comprise one or more of the following features considered alone or in any combination that is technically possible:
- during the training step and the operating step, the forecast of the wind parameters by the second model depends at least on weather or climate parameters corresponding to the first parameter(s), the prediction of said weather or climate parameters being fixed by the outputs of the first model;
- the second model is an autoregressive model;
- during the training step and the operating step, the first model is launched in advance of the second model and its output for each timestep t is given as an a priori to the second model to predict the wind parameters at said timestep t for the area of interest along with the corresponding past spatio-temporal data and previous predictions carried out by the second model until the previous timestep t-1, the previous timestep t-1 being the timestep just before the considered timestep t;
- the past spatiotemporal data also comprise the temporal evolution of at least one weather or climate parameter for the area of interest which is different from each first parameter;
- at least one weather or climate parameter is chosen in the group consisting in: the temperature, the pressure, the relative humidity, the precipitation, the mean sea level pressure, the sea surface temperature and the hectopascal geopotential height at a given height, such as the 500 hectopascal geopotential height;
- the second model is a Convolutional Long Short-Term Memory Neural Network or a Vision Transformer or a Perceiver IO;
- each first model is first trained on the basis of simulation data and then fine-tuned on the basis of reanalysis data;
- the first model is not derived from a Numerical Weather Prediction model;
- at least a first model uses simulations driven by Navier Stokes equations;
- the method comprises a step of determining a wind power for the area of interest as a function of the forecasted wind parameters obtained with the trained second model for said area of interest;
- the method comprises a step of designing and/or building a wind farm on the area of interest as a function of the wind power determined for the area of interest and of the forecasted wind parameters obtained with the trained second model for said area of interest.

The invention also relates to a computer program product comprising a readable information carrier having stored thereon a computer program comprising program instructions, the computer program being loadable onto a data processing unit and causing at least the steps of obtaining configuration data, of obtaining experience data and of training of a method as previously described, to be carried out when the computer program is carried out on the data processing unit.

The invention also relates to a readable information carrier on which is stored a computer program product as previously described.

### BRIEF DESCRIPTION OF THE DRAWINGS

The invention will be easier to understand in view of the following description, provided solely as an example and with reference to the appended drawings in which:
- Figure 1 is a schematic view of an example of a computer for implementing a method for forecasting wind parameters in an area of interest,
- Figure 2 is a flowchart of an example of implementation of a method for forecasting wind parameters in an area of interest, and
- Figure 3 is a schematic representation illustrating an example of the interactions between a first model and a second model during a training step and an operation step of the method of figure 2.

### DETAILED DESCRIPTION OF SOME EMBODIMENTS

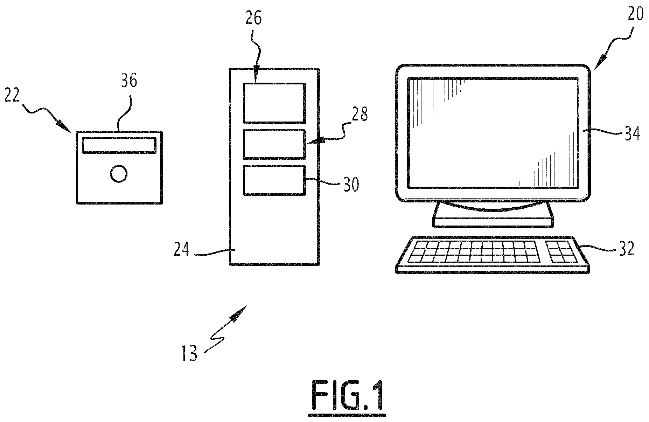

An example of a calculator 20 and of a computer program product 22 are illustrated on figure 1.

The calculator 20 is preferably a computer.

More generally, the calculator 20 is a computer or computing system, or similar electronic computing device adapted to manipulate and/or transform data represented as physical, such as electronic, quantities within the computing system's registers and/or memories into other data similarly represented as physical quantities within the computing system's memories, registers or other such information storage, transmission or display devices.

The calculator 20 interacts with the computer program product 22.

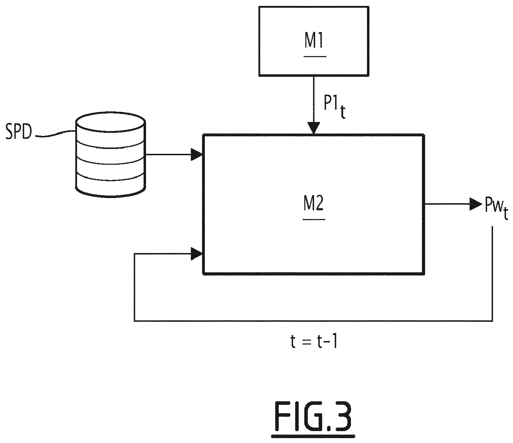

As illustrated on figure 1, the calculator 20 comprises a processor 24 comprising a data processing unit 26, memories 28 and a reader 30 for information media. In the example illustrated on figure 3, the calculator 20 comprises a human machine interface 32, such as a keyboard, and a display 34.

The computer program product 22 comprises an information medium 36.

The information medium 36 is a medium readable by the calculator 20, usually by the data processing unit 26. The readable information medium 36 is a medium suitable for storing electronic instructions and capable of being coupled to a computer system bus.

By way of example, the information medium 36 is a USB key, a floppy disk or flexible disk (of the English name "Floppy disc"), an optical disk, a CD-ROM, a magneto-optical disk, a ROM memory, a memory RAM, EPROM memory, EEPROM memory, magnetic card or optical card.

On the information medium 36 is stored the computer program 22 comprising program instructions.

The computer program 22 is loadable on the data processing unit 26 and is adapted to entail the implementation of a method for forecasting wind parameters P_{w} (the temporal evolution of wind parameters) in an area of interest, when the computer program 22 is loaded on the processing unit 26 of the calculator 20.

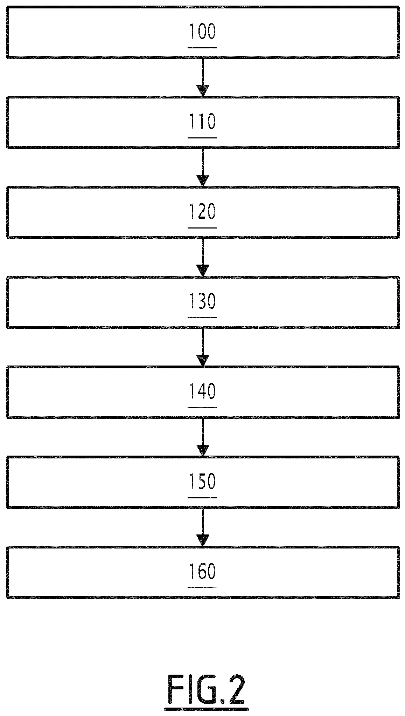

A method for forecasting wind parameters P_{w} in an area of interest, will now be described with reference to figures 2 and 3. In the description, forecasting is defined as making predictions about the future.

The wind parameters P_{w} comprise the speed of the wind and the direction of the wind.

The forecasting method comprises a step 100 of obtaining at least a first model M1 outputting a prediction of a first parameter P1 for an area of interest. The obtaining step 100 is, for example, implemented by the calculator 20 interacting with the computer program product 22, that is to say is computer-implemented.

The area of interest is a geographical area, preferably an area extended on several kilometers, such as a North sea region.

The first parameter P1 is a weather or climate parameter P_{wc}.

A weather or climate parameter P_{wc} is a parameter that is different from a wind parameter P_{w}. Weather and climate variability differ in space and time. Weather is what conditions of the atmosphere are for short periods of time, in general locally or regionally. Climate tackles, however, longer periods of time, in general beyond several months. It is the average of weather over time and space.

Each weather or climate parameter P_{wc} is, for example, chosen in the group consisting in: the temperature, the pressure, the relative humidity, the precipitation, the mean sea level pressure, the sea surface temperature and the hectopascal geopotential height at a given height, such as the 500 hectopascal geopotential height (Z500).

The first parameter P1 is preferably a weather or climate parameter for large scale circulations that have strong effect on long term wind forecast (large part of them are driven by Navier Stokes equations). For example, the first parameter P1 is an hectopascal geopotential height such as the 500 hectopascal geopotential height (Z500) or the sea surface temperature. In particular, the Z500 shows approximatively how far one has to go up in the atmosphere before the pressure drops to 500 hPa.

Advantageously, when several first models M1 are used, each first model M1 is configured to predict a different first parameter P1. For example, one first model M1 is configured to predict the Z500 and another one the sea surface temperature.

Each first model M1 is a physics-informed machine learning model, or more specifically a physics-informed neural network.

Physics-Informed Machine Learning integrates knowledge from data and mathematical physics models. Machine Learning models can learn from governing physical rules and hence provide physically consistent priors that can be integrated as a bias or constraints in a data-based learning. If we consider a specific task, these physics priors can be embedded in the design choices made on the Neural Network architecture. For example, some physics principles like symmetry, invariance to rotations, shifts and other geometrical transformations can be reflected by some Neural Networks and their kernels like Convolution Neural Networks, Covariant Neural Networks or equivariant transformer networks. Some other physics properties can be also encoded in network the architecture (neuron structures, activations, etc.).

Physics-informed machine learning can be performed also using a learning bias where the physics constrains are imposed by introducing a penalty on the loss function. This is the basis idea used, for example, in the Physics-Informed Neural Networks (PINNs). Using automatic differentiation, PINNs embed the partial differential equations (PDEs) in the loss function of a neural network. More precisely, given a PDE with its known initial and boundary conditions, a part of the PINN represents the surrogate of the PDE solution and another part of the network describes the PDE residual. The training loss function combines a loss of data measurements of the PDE solution from the initial and boundary conditions and a loss of PDE. The network is trained to minimize the overall loss.

Hence, the first model M1 obtained at step 100 is a model already trained and validated for its long-term physics consistency predictions. It can forecast a range of weather or climate parameters P_{wc} that are for example governed by partial differential equations such as large scale circulations, surface temperature and pressure. The predictions carried out by the first model M1 are for the whole considered area.

Hence, the first model M1 forecast paradigm is different and not derived from a Numerical Weather Prediction model.

In an embodiment, the first model M1 uses simulations driven by Navier Stokes equations (non-linear PDEs). Such equations are for example used during the training of the first model M1.

Examples of physics-informed machine learning model are described in the following articles:
- Karniadakis, G.E., Kevrekidis, I.G., Lu, L. et al. Physics-informed machine learning. Nat Rev Phys 3, 422-440 (2021).
- Kashinath K, Mustafa M, Albert A, Wu JL, Jiang C, Esmaeilzadeh S, Azizzadenesheli K, Wang R, Chattopadhyay A, Singh A, Manepalli A, Chirila D, Yu R, Walters R, White B, Xiao H, Tchelepi HA, Marcus P, Anandkumar A, Hassanzadeh P, Prabhat. Physics-informed machine learning: case studies for weather and climate modelling. Philos Trans A Math Phys Eng Sci. 2021 Apr 5;379(2194):20200093. doi: 10.1098/rsta.2020.0093. Epub 2021 Feb 15. PMID: 33583262.
- Chattopadhyay, Ashesh, Mustafa Mustafa, Pedram Hassanzadeh, and Karthik Kashinath. "Deep spatial transformers for autoregressive data-driven forecasting of geophysical turbulence." In Proceedings of the 10th International Conference on Climate Informatics, pp. 106-112. 2020.

Preferably, each first model M1 is first trained on the basis of simulation data and then fine-tuned on the basis of more realistic data like reanalysis data. The reanalysis data are data obtained by a meteorological model after the predictions of the meteorological model have been readjusted on the basis of observations (measures obtained with a sensor). Thus, the reanalysis data are the result of a data assimilation process which incorporates observations. The fine-tuning on reanalysis data enables a better precision of each first model M1 and more realistic results.

The forecasting method comprises a step 110 of obtaining past spatio-temporal data SPD for the area of interest to form a training database DB. The obtaining step 110 is, for example, implemented by the calculator 20 interacting with the computer program product 22, that is to say is computer-implemented.

The past spatio-temporal data SPD comprise a temporal evolution of the wind parameters P_{w} for the area of interest over a given period of time. The past spatio-temporal data SPD are thus a temporal and spatial evolution of the wind parameters P_{w} for the area of interest over a given period of time.

Optionally, the past spatio-temporal data SPD also comprise the temporal evolution of at least one weather or climate parameter P_{wc} for the area of interest over the given period of time. In this case, the considered weather or climate parameter P_{wc} is different from the first parameter P1. As explained previously, a weather or climate parameter P_{wc} is, for example, chosen in the group consisting in: the temperature, the pressure, the relative humidity, the precipitation, the mean sea level pressure, the sea surface temperature and the hectopascal geopotential height at a given height, such as the 500 hectopascal geopotential height (Z500).

The past spatio-temporal data SPD are, for example, a sequence of reanalysis and/or observation data for the wind parameters P_{w} and, if applicable, for some weather or climate parameter P_{wc} over the area of interest (e.g. North Sea region). The past spatio-temporal data SPD are typically collected with a specific uniform time resolution (e.g. 12 hours or one day) and represents the variability of those parameters through time over the considered region. For a specific timestep in the sequence, the data of each parameter P_{w}, P_{wc} are a two-dimensional representation of the corresponding weather or climate component over the area. Hence, such data represent the spatial variability of this component over the area with a specific spatial resolution (e.g., 5 km or 10 km, etc.). The two-dimensional representation of the different parameters are concatenated at each timestep to form a stack of different weather and climate maps. The time corresponding to each timestep (in terms of dates and hours) is also periodically encoded concatenated to the other variables which can serve as a relative reference of time at each timestep (e.g., season in the year, day in a month, etc.).

Given this structure, the past spatio-temporal data SPD reflect the past spatio-temporal variability of weather and climate components for the area of interest.

The training database DB comprises past spatio-temporal data SPD corresponding to the area of interest and to a given period of time (preferably several years to capture long-term wind patterns and other parameters dynamics).

The forecast method comprises a step 120 of training a second model M2 for forecasting wind parameters P_{w} for the area of interest when past spatiotemporal data SPD of the area of interest are inputted in the second model M2. The training step 120 is, for example, implemented by the calculator 20 interacting with the computer program product 22, that is to say is computer-implemented.

The second model M2 is a deep learning spatio-temporal neural network. A deep learning spatio-temporal neural network is a deep neural network that can take into account and learn the spatial and temporal dependencies from its input data.

The second model M2 is advantageously an autoregressive model, that is to say a model that consumes its previously predictions as additional input when generating the next predictions.

For example, the second model M2 is a Convolutional Long Short-Term Memory Neural Network (ConvLSTM) or a Vision Transformer (ViT) or a Perceiver IO. The second model M2 is a model forecasting wind features (speed and direction). Such wind features are some of the most complex parameters to forecast given their strong non-linearity and dependence to the dynamics of other weather and climate parameters P_{wc}.

In particular, the forecast of the wind parameters P_{w} by the second model M2 depends at least on weather or climate parameters P_{wc} corresponding to the first parameter(s) P1, the prediction of said weather or climate parameters P_{wc} being fixed by the outputs of the first model M1.

The second model M2 is thus trained (supervised training) on the training database DB to forecast future wind speed and direction (the training database DB is for example divided into different set of data for the different steps of the training (training, validation, testing)). It takes also into account the outputs of the first model M1 that are incorporated as an a priori during the training. Hence, the first model M1 insures already a physically consistent forecast of some large-scale weather and climate components for long term scales.

In an example of embodiment, illustrated on figure 3, the forecast output (or internal state) of the first model M1 at time step t is given as an a priori to the second model M2 to perform its wind forecast for time step t, along with its historical input data (past spatio-temporal data SPD and previous predictions carried out by the second model M2) until t-1. In other terms, the first model M1 performs an efficient proactive forecast that constraints and guides the forecast of the second model M2.

In particular, in an embodiment, the outputs of M1 and M2 are two dimensional maps corresponding to the whole area of interest. Each point is the predicted Pw or Pwc parameter (that is M2 is a spatio-temporal network). In addition, it should be noted that the first model M1 does not constraint the second model M2 directly only in terms of output range but it is a prior that condition the whole forecast of the second model M2 (range, motion, dynamics, behavior, etc. of the whole map). The conditioning manner is learned during training from data. The use of deep learning enables to capture complex correlation patterns.

Preferably, the first model M1 and the second model M2 are synchronized in time on a reference time (clock for example). For example, time (e.g., timestep corresponding to a specific date) is periodically encoded in the first model M1 and the second model M2 in order to give relative time position in a year (identifying seasons, monthly or even daily cycles), while keeping a proactive forecast action from first model M1.

For example, for a certain period of time for example 30 years corresponding to the whole training database DB, sets of time sequences of continuous days of length 20 days are defined. Each sequence is considered as a sample for the network training. For one training iteration, it can consider for example 15 days as a context input and learn to predict the next 5 days. From one iteration to another the network learn how to project to the future.

Hence, during the training, the second model M2 learns the dependencies of the wind components (speed and direction) with weather and climate parameters P_{wc} through time and space. The training does not rely on NWP forecasts but on historical data and on the forecasts made by model M1. The internal states or the outputs of the first model M1 are injected as an a priori to model M2 through time. Thus, the first model M1 runs in a proactive way. The first model M1 can be launched in advance and its forecast (or internal state) for timestep t is given as an input or a prior to M2 internal state to predict the wind at timestep t for the whole considered area of interest. As the wind component depends on weather or climate parameter P_{wc}, the first model M1 behaves as a provider of these parameters P_{wc} in a physically consistent along with information captured by the second model M2 from the training database DB.

Optionally, the second model M2 incorporates also other physics constraints during training for a better long-term efficiency, behaving as an inductive and learning bias (penalty on the loss function, physics-based regularization term, introducing Laplacian operations to detect sharp edges, or introducing continuity condition as in the NWP continuity equation for the wind motion, etc.).

The forecasting method comprises a step 130 of obtaining past spatiotemporal data SPD for the area of interest. The obtention step 130 is, for example, implemented by the calculator 20 interacting with the computer program product 22, that is to say is computer-implemented.

The forecasting method comprises a step 140 of operating the trained second model M2 for forecasting wind parameters P_{w} for the area of interest on the basis of the past spatiotemporal data SPD of the area of interest. The operating step 140 is, for example, implemented by the calculator 20 interacting with the computer program product 22, that is to say is computer-implemented.

During the operation step, the trained second model M2 also uses the predictions of the first parameters P1 done by the first model M1 to forecast the wind parameters P_{w} for the area of interest. Hence, the first model M1 is operating in parallel in a proactive way for long-term forecasting and its priors are still feeding the second model M2 during inference. The first model M1 is in phase leading regarding the second model M2.

Optionally, the forecasting method comprises a step 150 of determining a wind power for the area of interest as a function of the wind parameters P_{w} forecasted with the trained second model M2 for said area of interest. The determination step 150 is, for example, implemented by the calculator 20 interacting with the computer program product 22, that is to say is computer-implemented.

The wind power is the energy produced by a wind farm using wind energy.

Optionally, the forecasting method comprises a step 160 of designing and/or building a wind farm on the area of interest as a function of the wind power determined for the area of interest and of the wind parameters P_{w} forecasted with the trained second model M2 for said area of interest.

Hence, the forecasting method is not based only on Machine Learning (learning from past weather patterns a model that project a prediction in the future), nor only on learning a Physics equation solver, but on a fusion of both. This fusion allows a better capture of the physics dynamics and a better interaction between statistics and physics. This enables a more efficient and precise forecast of wind resources, even for large timescales.

In particular, the forecasting method enables to take advantage of the massive weather data available to learn long range wind patterns using spatio-temporal Machine and Deep Learning thanks to the second model M2. The physics knowledge is incorporated thanks to the outputs of each first model M1 using a paradigm that combines the potential of latest advances in connexionist Machine Leaning (ML) with physics knowledge, i.e., Physics Informed ML (PIML) or Physics Informed Neural Network (PINN) without relying on NWP as a forecast model.

Moreover, for the ML part, the proposed methodology is not based on local data dependencies in timeseries because of the use of a spatio-temporal Deep Learning model that can learn large scale weather patterns in time and space. In addition, using DL enables to handle the strong non linearity in wind patterns.

Specifically, some large-scale circulations of weather components are relevant for long-term wind forecast like sea-surface temperature or Z500. Learning to predict these components from simulated data and using PINNs can considerably enhance the wind forecast (using them or their learned representations as priors to the main forecast neural network). The PINNs here may offer more stability than numerical methods for long-term scales.

Forecasting wind variability for large time and space scales provides a key solution to anticipate chaotic lack of energy and take calculated precautionary actions with potential cost savings. It has also to improve the resilience of society to climate variability and changes that affects directly renewable energy resources.

The person skilled in the art will understand that the embodiments and variants described above can be combined to form new embodiments provided that they are technically compatible.

## Claims

1. A method for forecasting wind parameters (P_{w}) in an area of interest, the wind parameters (P_{w}) comprising the speed of the wind and the direction of the wind, the method comprising the following steps which are computer-implemented:
- obtaining at least a first model (M1) configured to output a prediction over time of a first parameter (P1) for the area of interest, the first parameter (P1) being a weather or climate parameter (P_{wc}), each weather or climate parameter (P_{wc}) being different from a wind parameter (P_{w}), each first model (M1) being a physics-informed machine learning model,
- obtaining past spatiotemporal data (SPD) for the area of interest to form a training database (DB), the past spatiotemporal data (SPD) comprising at least a temporal evolution of the wind parameters (P_{w}) for the area of interest,
- training a second model (M2) for forecasting wind parameters (P_{w}) for the area of interest when past spatiotemporal data (SPD) of the area of interest are inputted in the second model (M2), the second model (M2) being a deep learning spatiotemporal neural network, the training of the second model (M2) depending on the training database (DB) and on predictions of the first parameter (P1) obtained with each first model (M1) for the area of interest,
- obtaining past spatiotemporal data (SPD) for the area of interest, and
- operating the trained second model (M2) for forecasting wind parameters (P_{w}) for the area of interest on the basis of the past spatiotemporal data (SPD) obtained for the area of interest and on predictions of the first parameter (P1) obtained with each first model (M1) for the area of interest.

2. A method according to claim 1, wherein during the training step and the operating step, the forecast of the wind parameters (P_{w}) by the second model (M2) depends at least on weather or climate parameters (P_{wc}) corresponding to the first parameter(s) (P1), the prediction of said weather or climate parameters (P_{wc}) being fixed by the outputs of the first model (M1).

3. A method according to claim 1 or 2, wherein the second model (M2) is an autoregressive model.

4. A method according to any one of claims 1 to 3, wherein during the training step and the operating step, the first model (M1) is launched in advance of the second model (M2) and its output for each timestep t is given as an a priori to the second model (M2) to predict the wind parameters (P_{w}) at said timestep t for the area of interest along with the corresponding past spatio-temporal data (SPD) and previous predictions carried out by the second model (M2) until the previous timestep t-1, the previous timestep t-1 being the timestep just before the considered timestep t.

5. A method according to any one of claims 1 to 4, wherein the past spatiotemporal data (SPD) also comprise the temporal evolution of at least one weather or climate parameter (P_{wc}) for the area of interest which is different from each first parameter (P1).

6. A method according to any one of claims 1 to 5, wherein at least one weather or climate parameter (P_{wc}) is chosen in the group consisting in: the temperature, the pressure, the relative humidity, the precipitation, the mean sea level pressure, the sea surface temperature and the hectopascal geopotential height at a given height, such as the 500 hectopascal geopotential height.

7. A method according to any one of claims 1 to 6, wherein the second model (M2) is a Convolutional Long Short-Term Memory Neural Network or a Vision Transformer or a Perceiver IO.

8. A method according to any one of claims 1 to 7, wherein each first model (M1) is first trained on the basis of simulation data and then fine-tuned on the basis of reanalysis data.

9. A method according to any one of claims 1 to 8, wherein the first model (M1) is not derived from a Numerical Weather Prediction model.

10. A method according to any one of claims 1 to 9, wherein at least a first model (M1) uses simulations driven by Navier Stokes equations.

11. A method according to any one of claims 1 to 10, wherein the method comprises a step of determining a wind power for the area of interest as a function of the forecasted wind parameters (P_{w}) obtained with the trained second model (M2) for said area of interest.

12. A method according to claim 11, wherein the method comprises a step of designing and/or building a wind farm on the area of interest as a function of the wind power determined for the area of interest and of the forecasted wind parameters (P_{w}) obtained with the trained second model (M2) for said area of interest.

13. A computer program product comprising a readable information carrier having stored thereon a computer program comprising program instructions, the computer program being loadable onto a data processing unit and causing at least the steps of obtaining configuration data, of obtaining experience data and of training of a method according to any one of claims 1 to 12 to be carried out when the computer program is carried out on the data processing unit.

14. A readable information carrier on which a computer program product according to claim 13 is stored.
